# EUROPÄISCHE PATENTSCHRIFT

(11) **EP 0 529 251 B1**
(45) Veröffentlichungstag und Bekanntmachung des Hinweises auf die Patenterteilung: **01.03.1995**
(21) Anmeldenummer: 92111550.7
(22) Anmeldetag: 08.07.1992
(51) Int. Cl.: B60K 20/04, F16C 11/06

(54) **Schalthebellagerung für Getriebe von Kraftfahrzeugen**
Gear lever mounting for the gear box of motor vehicles
Montage de levier de vitesses pour la boîte de vitesses d'un véhicule motorisé

(30) Priorität: 22.08.1991 DE 4127730
(43) Veröffentlichungstag der Anmeldung: 03.03.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Sabel, Gustav, W-5000 Köln 71 (DE)
(74) Vertreter: Messulam, Alec Moses

(56) Entgegenhaltungen:
- EP-A- 0 072 465
- DE-A- 3 742 084
- DE-C- 3 502 233
- DE-U- 8 504 691
- GB-A- 2 080 401
- US-A- 5 033 872

## Beschreibung

Die Erfindung bezieht sich auf eine Schalthebellagerung für Getriebe von Kraftfahrzeugen, der im Oberbegriff des Patentanspruches 1 erläuterten Art.

Aus der DE-OS 37 42 084 ist eine Schalthebellagerung für Getriebe von Kraftfahrzeugen, mit einer in einem Lagergehäuse angeordneten, einteiligen Kugelpfanne aus zähelastischem Material mit einer Vielzahl von sich von einer Seite axial erstreckenden, etwa radial verlaufenden Schlitzen und einem unter elastischem Aufweiten der Kugelpfanne darin aufgenommenen Kugelkopf mit in entsprechenden seitlichen Führungsnuten in der Kugelpfanne einragenden seitlichen Führungszapfen bekannt, beider die Kugelpfanne über einen unten angeformten federelastichen Schließring mit Rastvorsprüngen im Lagergehäuse festgelegt ist.

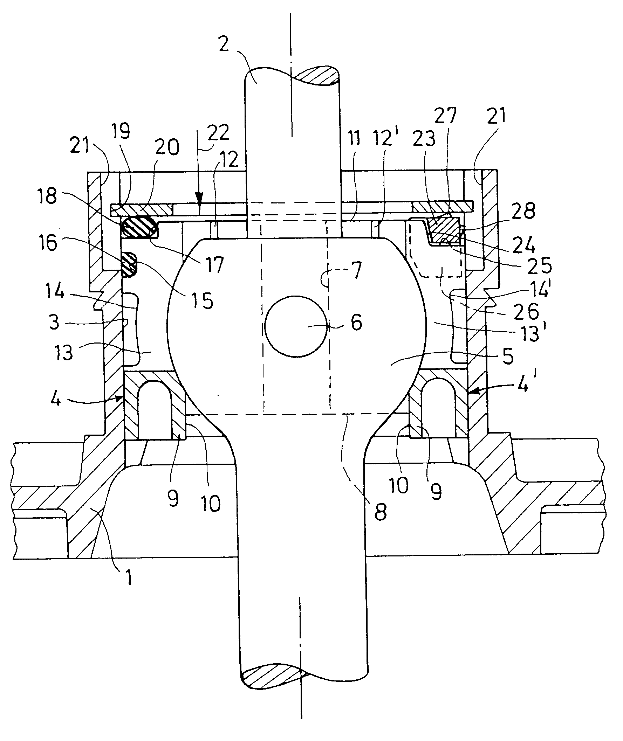

Die vorliegende Erfindung geht von einer bekannten Schalthebellagerung aus, die in der linken Hälfte der Zeichnung dargestellt ist. Bei dieser Schalthebellagerung für Getriebe von Kraftfahrzeugen, mit einer in einem Lagergehäuse in einer zylindrischen Bohrung angeordneten, einteiligen Kugelpfanne aus zähelastischem Material mit einer Vielzahl von von einer Endfläche axial zur Bohrung verlaufenden Schlitzen, die federnde Sektoren bilden und einem unter elastischem Aufweiten der Kugelpfanne darin aufgenommenen Kugelkopf mit seitlichen Führungszapfen, die in entsprechenden seitlichen Führungsnuten in der Kugelpfanne aufgenommen werden, wird die Kugelpfanne über zumindest einen elastischen Schließring im Lagergehäuse festgehalten.

Der federelastische Schließring wurde zumeist in Form eines O-Ringes oder eines gewellten Federscheibenringes angeordnet und durch einen Sicherungsring in Form eines Seegerringes festgehalten. Der O-Ring und der gewellte Federing sollten hierbei axiale Toleranzen an dem Kugelpfannenbauteil ausgleichen und eine spielfreie Lagerung des Kugelkopfes in der Kugelpfanne sichern.

Die bekannte Schalthebellagerung weist den Nachteil auf, daß durch die nach der Montage offenbleibenden sich axial erstreckenden, etwa radial verlaufenden Schlitze die Abstützung des oberen Bereiches des Kugelkopfes bei hohen Kräften labil werden kann, da sich die entsprechenden Sektoren der Kugelpfanne seitlich verlagern können.

Die Aufgabe der Erfindung ist es, eine Schalthebellagerung für Getriebe von Kraftfahrzeugen, der im Oberbegriff des Patentanspruches 1 bzw. 2 erläuterten Art derart zu verbessern, daß eine stabile Abstützung des Kugelkopfes auch unter erhöhten Kräften in jeder Richtung sichergestellt wird.

Aus dem DE-GM 85 04 691 wird hierbei die Anregung entnommen, den oberen Schließring, der durch einen Sicherungsring festgelegt wird, dem Außenumfang der Kugelpfanne angepaßt auszubilden und dadurch die einzelnen Sektoren der Kugelpfanne besser abzustützen.

Auch bei dieser Ausbildung einer Schalthebellagerung bleiben die Schlitze zwischen den Sektoren der Kugelpfanne offen und die Sektoren können sich daher bei erhöhten Kräften seitlich verlagern.

Gemäß der Erfindung wird die Aufgabe gelöst, indem bei einer Schalthebellagerung für Getriebe von Kraftfahrzeugen, der im Oberbegriff des Patentanspruches 1 bzw. 2 erläuterten Art, die im Kennzeichenteil des Patentanspruches 1 oder 2 aufgezeigten Maßnahmen vorgesehen werden.

Dadurch, daß der Schließring aus zähelastischem Material dem oberen Außenumfang der Kugelpfanne angepaßt ausgebildet ist und am Schließring eine Vielzahl von in Anzahl und Form den Schlitzen in der Kugelpfanne entsprechende, in diese einragenden Stege aufweist und am Schließring sowohl am Außenumfang als auch an seiner Endfläche eine Vielzahl von radial bzw. axial federnden Stützzungen angeordnet sind, die den Schließring gegenüber dem Lagergehäuse bzw. dem Sicherungsring federnd abstützen, wird eine Toleranzen der Kunststoffbauteile ausgleichende Verriegelung der Kugelpfanne sichergestellt, wobei durch die in die Schlitze der Kugelpfanne einragenden Stege des Schließringes eine Verlagerung der Sektoren der Kugelpfanne verhindert und in Verbindung mit der Abstützung am Lagergehäuse und am Sicherungsring eine zuverlässige Abstützung des Kugelkopfes auch bei hohen Kräften gewährleistet wird.

Gemäß einem weiteren Ausführungsbeispiel der Erfindung kann am Schließring die Vielzahl von radial bzw. axial federnden Stützzungen derart ausgebildet sein, daß sie mit der Ringnut im Lagergehäuse derart zusammenwirken, daß sie gleichzeitig die axiale Sicherungsfunktion des Sicherungs- oder Sprengringes mit übernehmen.

Die Erfindung wird anhand eines in den Figuren gezeigten Ausführungsbeispieles näher erläutert. Es zeigt:
- Figur: einen vertikalen Schnitt durch eine Schalthebellagerung für Getriebe von Kraftfahrzeugen im Bereich des Lagergehäuses, wobei in der linken Seite der Figur eine herkömmliche Schalthebellagerung und in der rechten Seite der Figur die erfindungsgemäße Schalthebellagerung gezeigt ist; die
In der Figur ist in einem Lagergehäuse 1 ein Schalthebel 2 aufgenommen. Im Lagergehäuse 1 ist eine zylindrische Bohrung 3 ausgebildet, in der eine einteilige Kugelpfanne 4 eingesetzt wird, in der ein Kugelkopf 5 aufgenommen wird, der am Schalthebel 2 ausgebildet oder angeformt ist.

Am Kugelkopf 5 sind seitlich auskragende Führungszapfen 6 ausgebildet, die mit entsprechenden seitlichen Führungsnuten 7 in der Kugelpfanne 4 die neutrale Ebene der Schalthebellagerung festlegend zusammenwirken.

Die Kugelpfanne 4 aus zähelastischem Material ist an ihrer einen Endfläche 8 mit axial vorspringenden Ansätzen 9 versehen, mit denen sie in entsprechenden Ausnehmungen 10 im Lagergehäuse 1 gegen Verdrehen gesichert festgelegt wird.

Die Kugelpfanne 4 ist mit von ihrer anderen Endfläche 11 axial ausgehenden Schlitzen 12 versehen, die etwa radial verlaufen und so eine Vielzahl von radial federnden Sektoren 13 bilden, deren radiale Federmöglichkeit durch eine ringförmige Ausnehmung 14 an der Kugelpfanne 4 noch erhöht wird.

Die Kugelpfanne 4 ist in ihrem oberen Bereich mit einem umlaufenden Ringnut 15 zur Aufnahme eines radial federnden O-Ringes 16 und an ihrer oberen Endfläche 11 mit einem Absatz 17 zur Aufnahme eines axial federnden O-Ringes 18 versehen.

Die zylindrische Bohrung 3 im Lagergehäuse 1 ist mit einer umlaufenden Ringnut 19 zur Aufnahme eines Sicherungsringes, z.B. eines Seegerringes 20, versehen. Zwei sich axial erstreckende Nuten 21 im oberen Bereich der zylindrischen Bohrung 3 des Lagergehäuses 1 können vorgesehen werden, um die Demontage des Sicherungsringes 20 zu erleichtern.

Die Montage der bekannten Schalthebellagerung erfolgt in der Weise, daß zunächst der Kugelkopf 5 bei sich noch ausserhalb des Lagergehäuses 1 befindlicher Kugelpfanne 4 in diese in axialer Richtung, siehe Pfeil 22, eingesetzt wird, was durch ein radiales Auffedern der Sektoren 13 ermöglicht wird. Danach werden die beiden O-Ringe 16 und 18 in ihren entsprechenden Nuten 15 bzw. Absätze 17 angeordnet und die vormontierte Anordnung axial in die zylindrische Bohrung 3 im Lagergehäuse 1 eingeschoben. Der eine O-Ring 16 sorgt hierbei für den Ausgleich von radialen Toleranzen, die bei solchen Kunststoffbauteilen in erheblichem Maße auftreten und sorgt für eine gewünschte federnde Anpressung der Sektoren 13 an den Kugelkopf 5.

Der andere O-Ring 18 sorgt für einen Ausgleich der gleichfalls in erheblichem Maße vorhandenen axialen Toleranzen, nachdem der Sicherungsring 20 in der Ringnut 19 montiert wurde.

Bei dieser in der linken Seite der Figur gezeigten bekannten Anordnung konnte es vorkommen, daß bei erheblichen seitlichen Kräften am Kugelkopf 5 einige Sektoren 13 derart seitlich verlagert wurden, daß ihre benachbarten Schlitze 12 geschlossen wurden. Damit wurde jedoch eine unerwünschte Abweichung von der Kugelform der Lagerung bewirkt.

Gemäß der Erfindung, die in der rechten Seite der Figur dargestellt ist, wird eine solche unerwünschte Verlagerung der Sektoren 13 vermieden.

Gemäß der Erfindung wird dies dadurch erreicht, daß ein Schließring 23 aus zähelastischem Material dem etwas veränderten oberen Außenumfang 24 am Absatz 25 der Kugelpfanne 4' angepaßt ausgebildet wird und am Schließring 23 eine in Anzahl von in Anzahl und Form den Schlitzen 12' entsprechende und in diese einragenden Stege 26 angeformt sind und am Schließring 23 in seiner Endfläche und an seinem Außenumfang axial bzw. radial federnde Stützungen 27 und 28 ausgebildet werden.

Wie aus der rechten Seite der Figur zu ersehen ist, erstrecken sich die am Schließring 23 angeformten Stege 26 in den oberen Bereich der Schlitze 12' zwischen den Sektoren 13' und verhindern hierdurch bei erheblichen Kräften, die über den Kugelkopf 5 nach seitlich oben einwirken, ein seitliches Verlagern der radial federnden Sektoren 13, wodurch die früher auftretende unerwünschte Verformung der exakten Kugelform und damit eine unsaubere Abstützung des Kugel- kopfes 5 vermieden wird.

Über die in axialer Richtung federnden Zungen 27 und die in radialer Richtung federnden Zungen 28 wird der Schließring 23 gegenüber der zu den zylindrischen Bohrungen 3 bzw. dem Sicherungsring 20 abgestützt und übernimmt hierdurch gleichzeitig die toleranzausgleichenden elastischen Funktionen der früher benötigten zwei O-Ringe.

Durch Ausführen des oberen Außenumfanges 24 der Kugelpfanne 4' als eine Kegelfläche mit einem Neigungswinkel größer als Selbsthemmung, kann beim Einsetzen des entsprechend angepaßten Schließringen 23 eine erwünschte Vorspannung zur absolut spielfreien Lagerung aufgebracht werden.

Nach einer weiteren Ausführungsform der Erfindung, die nicht in der Zeichnung dargestellt ist, wird vorgeschlagen, die axial- und radial federnden Zungen 27 und 28 am Schließring 23 derart auszubilden, daß sie unmittelbar und ohne Mitwirken des Sicherungsringes 20 mit der Ringnut 19 in der zylindrischen Bohrung 3 des Lagergehäuses 1 zusammenwirken können. Damit könnte dann auch noch der Sicherungs- oder Seegerring 20 entfallen.

Selbstverständlich ist das in den Zeichnungen gezeigte Ausführungsbeispiel noch in verschiedenster Hinsicht modifizierbar, so kann z.B. auch die Sicherung der Kugelpfanne gegen Verdrehen durch eine entsprechende Ausbildung des erfindungsgemäßen Schließringes erfolgen, indem dieser über seine entsprechenden radial federnden Zungen, z.B. in der Nut 21 der zylindrischen Bohrung 3, verdrehsicher festgelegt wird.

Die Montage der erfindungsgemäßen Schalthebellagerung erfolgt in ähnlicher Weise wie es im Zusammenhang mit der bekannten Anordnung erläutert wurde, d.h., der Kugelkopf 5 wird noch bei außerhalb des Lagergehäuses 1 befindlicher Kugelpfanne 4' durch radiales Aufweiten der Sektoren 13' in die Kugelpfanne 4' eingesetzt. Danach wird dann in Richtung des Pfeiles 22 der Schließring 23 in die entsprechenden Schlitze 12' der Kugelpfanne 4' eingeführt und danach die gesamte Anordnung in die zylindrische Bohrung 3 im Lagergehäuse 1 abgesenkt. Nunmehr wird der Sicherungsring 20 in seiner Ringnut 19 montiert, wobei die sowohl in axialer als auch in radialer Richtung federnden Zungen 27 und 28 des Schließringes 23 über den angepaßten Außenumfang 25 auf die Kugelpfanne 4' derart einwirken, daß allenfalls vorhandene axiale und radiale Bautoleranzen weggedrückt werden, um die erwünschte spielfreie kugelgelenkartige Lagerung des Schalthebels 2 sicherzustellen.

## Patentansprüche

1. Schalthebellagerung für Getriebe von Kraftfahrzeugen, mit einer in einem Lagergehäuse (1) in einer zylindrischen Bohrung (3) angeordneten, einteiligen Kugelpfanne (4') aus zähelastischem Material mit einer Vielzahl von von einer Endfläche (11) axial zur Bohrung (3) verlaufenden Schlitzen (12'), die federnde Sektoren (13') bilden und einem Unter elastischem Aufweiten der Kugelpfanne (4') darin aufgenommenen Kugelkopf (5) mit seitlichen Führungszapfen (6), die in entsprechenden seitlichen Führungsnuten (7) in der Kugelpfanne (4') aufgenommen werden und wobei die Kugelpfanne (4') über zumindest einen elastischen Schließring (23) im Lagergehäuse (1) festlegbar ist,
**dadurch gekennzeichnet**, daß
- der Schließring (23) aus zähelastischem Material besteht und einem abgesetzten Außenumfang (24) an einem Absatz (25) der Kugelpfanne (4') angepaßt ausgebildet ist,
- am Schließring (23) eine Vielzahl von in Anzahl und Form den Schlitzen (12') in der Kugelpfanne (4') zum Teil entsprechenden, in diese einragenden Stege (26) aufweist und
- am Schließring (23) sowohl an seiner Endfläche als auch an seinem Außenumfang eine Vielzahl von axial bzw. radial federnden Stützzungen (27 und 28) angeordnet sind, die mit der zylindrischen Bohrung (3) bzw. einem Sicherungsring (20) zusammenwirken.

2. Schalthebellagerung für Getriebe von Kraftfahrzeugen, mit einer in einem Lagergehäuse (1) in einer zylindrischen Bohrung (3) angeordneten, einteiligen Kugelpfanne (4') aus zähelastischem Material mit einer Vielzahl von von einer Endfläche (11) axial zur Bohrung (3) verlaufenden Schlitzen (12'), die federnde Sektoren (13') bilden und einem unter elastischem Aufweiten der Kugelpfanne (4') in dieser aufgenommenen Kugelkopf (5) mit seitlichen Führungszapfen (6), die in entsprechenden seitlichen Führungsnuten (7) in der Kugelpfanne (4') aufgenommen werden und wobei die Kugelpfanne (4') über zumindest einen elastischen Schließring (23) im Lagergehäuse (1) festlegbar ist,
**dadurch gekennzeichnet**, daß
- der Schließring (23) aus zähelastischem Material besteht und einem Außenumfang (24) an einem Absatz (25) der Kugelpfanne (4') angepaßt ausgebildet ist,
- am Schließring (23) eine Vielzahl von in Anzahl und Form den Schlitzen (12') in der Kugelpfanne (4') entsprechenden, in diese einragenden Stege (26) aufweist und
- am Schließring (23) sowohl an seiner Endfläche als auch an seinem Außenumfang eine Vielzahl von axial bzw. radial federnden Stützzungen (27 und 28) angeordnet sind, die mit der zylindrischen Bohrung (3) und der Ringnut (19) zusammenwirken.

3. Schalthebellagerung nach den Ansprüchen 1 und 2,
**dadurch gekennzeichnet**, daß
- der Schließring (23) aus zähelastischem Material einem Außenumfang (24) am Absatz (25) als Kegelfläche mit einem Neigungswinkel größer als Selbsthemmung ausgeführt ist.

## Claims

1. A gearshift lever bearing for motor vehicle gearboxes, comprising a one-piece ball socket (4') of tough, elastic material fitted in a cylindrical bore (3) in a bearing housing (1) and having a plurality of slots (12'), extending from one end face (11) axially of the bore (3), which form resilient sectors (13'), and a ball (5) which is received in the ball socket (4') by elastic opening out thereof and has lateral guide studs (6) which are received in corresponding lateral guide grooves (7) in the ball socket (4'), the ball socket (4') being retainable in position in the bearing housing (1) by means of at least one elastically resilient locking ring (23), characterised in that
- the locking ring (23) is of tough, elastic material and is adapted in form to a rebated outer circumference (24) on a shoulder (25) of the ball socket (4'),
- said locking ring (23) has thereon a plurality of webs (26), corresponding in part in number and form to, and projecting into, the slots (12') in the ball socket (4'), and
- said locking ring (23) has both on its end face and on its outer circumference a plurality of respectively axially and radially resilient supporting tongues (27 and 28) cooperating respectively with the cylindrical bore (3) and a retaining ring (20).

2. A gearshift lever bearing for motor vehicle gearboxes, shift lever bearing comprising a one-piece ball socket (4') of tough, elastic material fitted in a cylindrical bore (3) in a bearing housing (1) and having a plurality of slots (12'), extending from one end face (11) axially of the bore (3), which form resilient sectors (131), and a ball (5) which is received in the ball socket (4') by elastic opening out thereof and has lateral guide studs (6) which are received in corresponding lateral guide grooves (7) in the ball socket (4'), the ball socket (4') being retainable in position in the bearing housing (1) by means of at least one elastically resilient locking ring (23), characterised in that
- the locking ring (23) is of tough elastic material and is adapted in form to an outer circumference (24) on a shoulder (25) of the ball socket (4'),
- said locking ring (23) has thereon a plurality of webs (26), corresponding in number and form to, and projecting into, the slots (12') in the ball socket (4'), and
- said locking ring (23) has both on its end face and on its outer circumference a plurality of respectively axially and radially resilient supporting tongues (27 and 28) cooperating with the cylindrical bore (3) and the annular groove (19).

3. A gearshift lever bearing according to either of claims 1 and 2, characterised in that
- the locking ring (23) of tough elastic material is formed corresponding to an outer circumference (24) on the shoulder (25) as a conical surface having an angle of inclination greater than that giving rise to self-locking.

## Revendications

1. Montage de levier de changement de vitesse pour transmissions de véhicules automobiles, comprenant une cage sphérique (4') en matière élastique dure d'un seul tenant qui est disposée dans un perçage cylindrique (3) ménagé dans un carter porte-paliers (1) et qui comprend une pluralité de fentes (12'), celles-ci s'étendent axialement depuis une surface d'extrémité (11) jusqu'au perçage (3) et constituant des secteurs élastiques (13'), ainsi qu'une rotule (5) qui est reçue dans la cage sphérique (4') par élargissement élastique de celle-ci et qui comprend des goujons de guidage latéraux (6) reçus dans des rainures de guidage latérales correspondantes (7) ménagées dans la cage sphérique (4'), cependant que la cage sphérique (4') peut être fixée dans le carter porte-paliers (1) par l'intermédiaire d'au moins un anneau de fermeture élastique (23),
caractérisé par le fait que :
- l'anneau de fermeture (23) est constitué par une matière élastique dure, et il est conformé en étant adapté à un pourtour extérieur étagé (24) d'un décrochement (25) de la cage sphérique (4'),
- l'anneau de fermeture (23) présente une pluralité de nervures (26) dont le nombre et la forme correspondent en partie à ceux des fentes (12') ménagées dans la cage sphérique (4') et qui pénètrent dans celles-ci,
- et une pluralité d'appuis (27 et 28) à élasticité axiale et radiale, respectivement, sont disposés sur l'anneau de fermeture (23), tant sur sa surface d'extrémité que sur son pourtour extérieur, en coopérant avec le perçage cylindrique (3) et, respectivement, avec un anneau de retenue (20).

2. Montage de levier de changement de vitesse pour transmissions de véhicules automobiles, comprenant une cage sphérique (4') en matière élastique dure d'un seul tenant qui est disposée dans un perçage cylindrique (3) ménagé dans un carter porte-paliers (1) et qui comprend une pluralité de fentes (12'), celles-ci s'étendent axialement depuis une surface d'extrémité (11) jusqu'au perçage (3) et constituant des secteurs élastiques (13'), ainsi qu'une rotule (5) qui est reçue dans la cage sphérique (4') par élargissement élastique de celle-ci et qui comprend des goujons de guidage latéraux (6) reçus dans des rainures de guidage latérales correspondantes (7) ménagées dans la cage sphérique (4'), cependant que la cage sphérique (4') peut être fixée dans le carter porte-paliers (1) par l'intermédiaire d'au moins un anneau de fermeture élastique (23),
caractérisé par le fait que :
- l'anneau de fermeture (23) est constitué par une matière élastique dure, et il est conformé en étant adapté à un pourtour extérieur (24) d'un décrochement (27) de la cage sphérique (4'),
- l'anneau de fermeture (23) présente une pluralité de nervures (26) dont le nombre et la forme correspondent à ceux des fentes (12') ménagées dans la cage sphérique (4') et qui pénètrent dans celles-ci,
- et une pluralité d'appuis (27 et 28) à élasticité axiale et radiale, respectivement, sont disposés sur l'anneau de fermeture (23), tant sur sa surface d'extrémité que sur son pourtour extérieur, en coopérant avec le perçage cylindrique (3) et, respectivement, avec la rainure annulaire (19).

3. Montage de levier de changement de vitesse selon la revendication 1, caractérisé par le fait que l'anneau de fermeture (23) en matière élastique dure porte sur le pourtour extérieur (24) du décrochement (25) qui est réalisé sous la forme d'une surface conique dont l'angle d'inclinaison est supérieur à l'angle d'autoblocage.
